# EUROPÄISCHE PATENTSCHRIFT

(11) **EP 2 124 069 B1**
(45) Veröffentlichungstag und Bekanntmachung des Hinweises auf die Patenterteilung: **25.01.2012**
(21) Anmeldenummer: 08005342.4
(22) Anmeldetag: 20.03.2008
(51) Int. Cl.: G01S 7/481, G01S 17/42, G02B 26/10

(54) **Omnidirektionales Lidar System**
Omnidirectional Lidar system
Système LIDAR omnidirectionnel

(43) Veröffentlichungstag der Anmeldung: 25.11.2009
(73) Patentinhaber: SICK AG, 79183 Waldkirch (DE)
(72) Erfinder: Kiehn, Michael, 21039 Hamburg (DE)
(74) Vertreter: Manitz, Finsterwald & Partner GbR

(56) Entgegenhaltungen:
- WO-A-01/59890
- US-A- 3 786 757
- US-A- 5 018 447
- US-B1- 6 204 916
- US-B1- 6 839 127
- SIMPSON M L ET AL: "INTENSITY-MODULATED, STEPPED FREQUENCY CW LIDAR FOR DISTRIBUTED AEROSOL AND HARD TARGET MEASUREMENTS" APPLIED OPTICS, OSA, OPTICAL SOCIETY OF AMERICA, WASHINGTON, DC, Bd. 44, Nr. 33, 20. November 2005 (2005-11-20), Seiten 7210-7217, XP001236472 ISSN: 0003-6935

## Beschreibung

Die Erfindung betrifft eine Vorrichtung zur ortsaufgelösten Erfassung von in einem Überwachungsbereich befindlichen Gegenständen mit einer Sendeeinrichtung zur Aussendung von elektromagnetischer Strahlung in einem Sendebereich und mit einer Empfangseinrichtung zum Empfang von aus einem Empfangsbereich reflektierter Strahlung, wobei sich der Sendebereich und der Empfangsbereich in einem innerhalb des Überwachungsbereichs gelegenen und einen Erfassungswinkel abdeckenden Erfassungsbereich überlappen oder schneiden, in welchem die ausgesandte Strahlung von Gegenständen reflektiert wird.

Eine Vorrichtung gemäß dem Oberbegriff von Anspruch 1 ist aus US 5,018,447 A bekannt. Eine weitere Vorrichtung zur Gegenstandserfassung ist in US 3,786,757 A beschrieben.

Derartige Erfassungsvorrichtungen sind grundsätzlich bekannt, z.B. in Form von Laserscannern, die als scannende Laserentfernungsmesser ausgebildet sind und den Erfassungsbereich mit einem Laserstrahl zeitlich gepulst oder kontinuierlich abtasten. Die Entfernungsmessung erfolgt dabei z.B. nach einem Laufzeitmessprinzip ("time of flight", TOF) oder einem Phasenmessprinzip. Das TOF-Prinzip sowie ein Entfernungsmessverfahren unter Verwendung von intensitätsmodulierten Continuous-Wave-Lasern sind beispielsweise in dem Artikel "Intensity-modulated, stepped frequency cw lidar for distributed aerosol and hard target measurements" von Simpson et al., veröffentlicht in "Applied Optics", Vol 44, No. 33, 20. November 2005, S. 7210 bis 7217, beschrieben.

Derartige Erfassungsvorrichtungen werden z.B. an Fahrzeugen montiert, um die Fahrzeugumgebung abzutasten und hierdurch in Sichtweite der Vorrichtung befindliche Gegenstände, wie beispielsweise andere Verkehrsteilnehmer, zu erkennen. Hierdurch ist das Fahrzeug gewissermaßen in der Lage, sich ein ortsaufgelöstes und - aufgrund der Möglichkeit zur Messung von Entfernungen - außerdem tiefenaufgelöstes Bild von seiner Umgebung zu machen, wobei diese Umgebungserfassung in Echtzeit erfolgt. Vielfältige Anwendungen sind mit den auf diese Weise gewonnenen Umgebungsdaten möglich. Derartige Erfassungsvorrichtungen werden auch in industriellen Anwendungen eingesetzt.

Insbesondere für scannende TOF-Laserentfernungsmesser, die einen vergleichsweise großen Winkelbereich von bis zu 360° in wenigstens einer Sende- oder Erfassungsebene überwachen sollen, ist es bekannt, den im Prinzip eindimensionalen Abtastlaserstrahl, also die ausgesandte Strahlung, innerhalb dieser Ebene mit einer vorgegebenen, die Ortsauflösung mit bestimmenden Winkelauflösung auszulenken. Hierzu ist es bekannt, in den - auch einfach als Sensoren bezeichneten - Erfassungsvorrichtungen den - auch als Mess- oder Fahrstrahl bezeichneten - Abtaststrahl mittels eines motorisch bewegten rotierenden Prismas oder mittels eines z.B. um 45° zur optischen Achse gekippten rotierenden Spiegels auszulenken. In diesen Fällen verlaufen die Rotationsachse des Primas bzw. des Spiegels und die optische Achse des Sensors parallel zueinander. In einer alternativen Ausgestaltung kann die gesamte elektrooptische Einheit des Sensors zur Rotation gebracht werden. Hierbei werden sowohl die Sendeals auch die Empfangsapertur auf einer Kreisbahn bewegt, um dafür zu sorgen, dass der Abtaststrahl des Sensors den gewünschten Winkelbereich von bis zu 360° überstreicht.

Die vorstehend genannten Lösungen haben den Nachteil, dass vergleichsweise große Massen bewegt, insbesondere in Rotation versetzt, werden müssen. Die hierzu erforderliche elektrische Leistung trägt in einem nicht unerheblichen Umfang zur gesamten Leistungsaufnahme des Sensors bei. Von Nachteil ist ferner, dass die erforderliche Lagerung der rotierenden Bauteile die Lebensdauer des Sensors signifikant begrenzt.

Aufgabe der Erfindung ist es, eine Erfassungsvorrichtung der eingangs genannten Art derart weiterzubilden, dass die vorstehend erwähnten

Nachteile vermieden werden, wobei insbesondere bei möglichst einfachem, störunanfälligem und eine möglichst lange Lebensdauer sicherstellendem Aufbau eine zuverlässige Erfassung von in einem Überwachungsbereich befindlichen Gegenständen über einen möglichst großen Winkelbereich von insbesondere bis zu 360° erzielbar sein soll.

Die Lösung dieser Aufgabe erfolgt durch die Merkmale des Anspruchs 1.

Insbesondere ist erfindungsgemäß vorgesehen, dass die Vorrichtung eine im Ausbreitungsweg der ausgesandten Strahlung und/oder der reflektierten Strahlung gelegene Abbildungsanordnung umfasst, die zu jedem Zeitpunkt den gesamten Erfassungsbereich sendeseitig und/oder empfangsseitig abdeckt, wobei die Vorrichtung, insbesondere zusätzlich zu der Abbildungsanordnung, Ortsauflösungsmittel zur Unterscheidung der reflektierten Strahlung hinsichtlich des Reflexionsortes umfasst.

Bei dem Erfassungsbereich handelt es sich um denjenigen Bereich des Überwachungsbereiches, in den die Vorrichtung gewissermaßen sowohl mit der Sendeeinrichtung als auch mit der Empfangseinrichtung "blickt". Mit anderen Worten ist der Erfassungsbereich derjenige Bereich in der Umgebung der Vorrichtung, in welchem Gegenstände von der Vorrichtung detektiert, d.h. "gesehen", werden können. Prinzipiell ist es möglich, dass der Sendebereich und der Empfangsbereich mehr oder weniger zusammenfallen. Dies ist beispielsweise bei einer so genannten koaxialen Anordnung eines Senders der Sendeeinrichtung und eines Empfängers der Empfangseinrichtung bzw. der entsprechenden Optiken der Fall. Bei einer so genannten biaxialen Anordnung dagegen "blicken" der Sender und der Empfänger aus unterschiedlichen Richtungen auf den Erfassungsbereich. In einer solchen Anordnung kann insbesondere eine Überlappung von Sendebereich und Empfangsbereich in einem Nahbereich der Erfassungsvorrichtung verhindert werden.

Die Ortsauflösung der erfindungsgemäßen Vorrichtung ist auch durch die Größe des Querschnitts bestimmt, die ein in den Erfassungsbereich ausgesandter Strahl auf einem Gegenstand besitzt, an welchem der Strahl reflektiert wird. Insofern kann die Ortsauflösung von der Entfernung zwischen Erfassungsvorrichtung und Gegenstand abhängig sein, wenn der ausgesandte Strahl eine Divergenz aufweist, d.h. sich aufweitet. Eine Rolle spielen hier auch die Abbildungseigenschaften der verwendeten optischen Einrichtungen der Sendeeinrichtung, insbesondere der erfindungsgemäßen Abbildungsanordnung, sofern diese sendeseitig wirksam ist.

Indem erfindungsgemäß die Abbildungsanordnung den gesamten Erfassungsbereich abdeckt, "sieht" die Abbildungsanordnung zu jedem Zeitpunkt eine Mehrzahl von (möglichen) Reflexionsorten, wobei "möglich" hier so zu verstehen ist, dass von einem Reflexionsort tatsächlich nur dann gesprochen werden kann, wenn sich im Erfassungsbereich ein Gegenstand befindet, an dem eine Reflexion stattfinden kann. Mit anderen Worten ist die Abbildungsanordnung dazu in der Lage, gleichzeitig eine Mehrzahl von Reflexionsorten auf einem im Erfassungsbereich befindlichen Gegenstand zu erzeugen (sendeseitige Abdeckung) und/oder eine Mehrzahl von Reflexionsorten zu "sehen" und auf der Empfangseinrichtung abzubilden (empfangsseitige Abdeckung).

Gewissermaßen als "Ausgleich" für eine derartige gleichzeitige Abdeckung des gesamten Erfassungsbereiches sind mit dem Ziel einer ortsaufgelösten Erfassung der im Überwachungsbereich befindlichen Gegenstände die Ortsauflösungsmittel vorgesehen. Diese Mittel sind zur Unterscheidung der reflektierten Strahlung hinsichtlich des Reflexionsortes ausgebildet. Die Erfindung hat den Vorteil, dass die Abbildungsanordnung nicht bewegt zu werden braucht, da sie dazu in der Lage ist, zu jedem Zeitpunkt den gesamten Erfassungsbereich abzudecken. Die Ortsauflösungsmittel können in vielfältiger Weise realisiert werden. Insbesondere ermöglicht es die Erfindung, für die gewünschte Ortsauflösung auf eine Bewegung von Bauteilen ganz zu verzichten oder die für die gewünschte Ortsauflösung zu bewegenden Massen auf ein Minimum zu reduzieren.

Der von der Abbildungsanordnung abgedeckte, d.h. "gesehene", Erfassungswinkel kann grundsätzlich beliebig groß gewählt werden. So ist es möglich, dass die Abbildungsanordnung einen Erfassungswinkel von wenigstens 90°, vorzugsweise von wenigstens 180° und insbesondere bevorzugt von 360° abdeckt. In letzterem Fall liegt ein Sensor mit "Rundumsicht" vor.

Vorzugsweise ist die Erfassungsvorrichtung als Entfernungsmesser ausgebildet. Insbesondere ist für jeden (möglichen) Reflexionsort ein Entfernungswert bestimmbar. Die Vorrichtung kann zur Entfernungsmessung nach dem Laufzeitmessprinzip und/oder nach dem Phasenmessprinzip ausgebildet sein. Insbesondere ist die Vorrichtung als ein Laserscanner ausgebildet, der den Erfassungsbereich zeitlich gepulst oder kontinuierlich mit wenigstens einem ausgesandten Laserstrahl abtastet.

Des Weiteren kann erfindungsgemäß vorgesehen sein, dass die Sendeeinrichtung zur Aussendung der Strahlung in wenigstens einer Sendeebene ausgebildet ist. Bei einem Erfassungswinkel von 360° beispielsweise erfolgt die Erfassung der Umgebung der Vorrichtung somit auf einem Kreiszylinder, dessen Höhe von der Größe des Querschnitts der ausgesandten Strahlung in der jeweiligen Entfernung von der Vorrichtung abhängt. Vorzugsweise ist die Abbildungsanordnung zur Umlenkung der ausgesandten Strahlung und/oder der reflektierten Strahlung ausgebildet. Beispielsweise erfolgt eine Umlenkung um 90°. Bei einer Anordnung der Sendeeinrichtung oberhalb oder unterhalb der Abbildungsanordnung und Aussendung der Strahlung in Richtung der Abbildungsanordnung in vertikaler Richtung erfolgt somit eine Umgebungserfassung in einer horizontalen Sendeebene.

Des Weiteren kann erfindungsgemäß vorgesehen sein, dass die Abbildungsanordnung wenigstens ein optisch wirksames Element umfasst. Bei diesem Element handelt es sich insbesondere um eine Linse, bevorzugt um eine so genannte Panoramalinse oder omnidirektionale Linse, oder um eine Strahlungsreflexionsfläche, bevorzugt um einen zumindest teilkegelförmigen Spiegel.

Derartige optisch wirksame Elemente, insbesondere die erwähnten Panoramalinsen bzw. omnidirektionalen Linsen, sind grundsätzlich bekannt. Der Einsatz derartiger Linsen erfolgt im Bereich von Videoanwendungen. Die Erfindung nutzt in vorteilhafter Weise die Eigenschaft derartiger optisch wirksamer Elemente dazu aus, einen großen Erfassungsbereich, der insbesondere einen Erfassungswinkel von bis zu 360° umfasst, auf einmal abdecken zu können, ohne die Elemente hierfür bewegen, insbesondere drehen, zu müssen. Die Erfindung ermöglicht somit erstmals den Einsatz derartiger optisch wirksamer Elemente in einer Vorrichtung zur ortsaufgelösten Umgebungserfassung, insbesondere von Panoramalinsen bzw. omnidirektionalen Linsen in Verbindung mit einem Laserscanner. Da erfindungsgemäß keine Notwendigkeit mehr besteht, eine vergleichsweise große Masse aufweisende Komponenten zu bewegen, insbesondere in Rotation zu versetzen, wird die Lebensdauer der erfindungsgemäßen Erfassungsvorrichtungen im Vergleich zu bislang bekannten Vorrichtungen signifikant erhöht. Des Weiteren sorgt die Erfindung für eine relevante Reduzierung der Leistungsaufnahme der Erfassungsvorrichtung.

In einem möglichen Ausführungsbeispiel der Erfindung umfasst die Abbildungsanordnung eine gemeinsame Abbildungseinrichtung, die sowohl sendeseitig als auch empfangsseitig wirksam ist. Dies ist jedoch nicht zwingend. Es ist auch möglich, dass die Abbildungsanordnung sowohl sendeseitig als auch empfangsseitig jeweils eine separate Abbildungseinrichtung umfasst. Diese beiden Abbildungseinrichtungen können insbesondere baugleich, bevorzugt identisch, ausgeführt sein. Hierdurch wird ein gemäß einer weiteren Ausführungsform vorgesehener, hinsichtlich zumindest der prinzipiellen Anordnung und Wirkungsweise der optischen Bauteile symmetrischer Grundaufbau der erfindungsgemäßen Erfassungsvorrichtung ermöglicht, wobei die Symmetrie bezüglich einer die Sendeseite von der Empfangsseite trennenden Ebene gegeben ist. Hierbei ist "symmetrisch" nicht zu eng auszulegen. Vielmehr sollen Unterschiede zwischen der Empfangsseite und der Sendeseite, die in Bezug auf die spezifischen Funktionen der Sendeeinrichtung einerseits und der Empfangseinrichtung andererseits erforderlich oder vorteilhaft sind (z.B. Unterschiede in der Größe der wirksamen Empfangsfläche einerseits und der wirksamen Sendefläche andererseits), an dem symmetrischen Grundaufbau an sich aber nichts ändern, von dem Begriff "Symmetrie" mit umfasst sein. So ist man naturgemäß bestrebt, in Abhängigkeit von der Größe des Empfängers die Empfangsoptik derart und insbesondere möglichst großflächig auszulegen, dass die empfangene Leistung möglichst hoch ist. Gleichzeitig kann sendeseitig dagegen eine deutlich kleinere Sendeoptik ausreichend sein.

In einem weiteren Ausführungsbeispiel können die Ortsauflösungsmittel empfangsseitig wirksam sein. Dabei kann insbesondere vorgesehen sein, dass die Sendeeinrichtung dazu ausgebildet ist, zu einem Zeitpunkt den gesamten Erfassungsbereich mit ausgesandter Strahlung zu beaufschlagen.

Hierbei ist es insbesondere möglich, die gesamte wirksame Fläche der Abbildungsanordnung mittels eines Senders der Sendeeinrichtung, beispielsweise einer Laserquelle, zu "beleuchten", d.h. mit der Abtaststrahlung zu beaufschlagen. Hierdurch breitet sich die Abtaststrahlung in alle vorgesehenen Richtungen aus. Bei einem Erfassungswinkel von 360° kann die Abtaststrahlung folglich von allen Gegenständen, die sich um die Vorrichtung herum und innerhalb der Reichweite der Vorrichtung befinden, gleichzeitig reflektiert werden. Für die gewünschte Ortsauflösung wird hierbei auf der Empfangsseite gesorgt. Hierzu kann beispielsweise die Empfangseinrichtung einen Empfänger umfassen, der in eine Mehrzahl von Einzelempfängern unterteilt ist, die jeweils wenigstens einem (möglichen) Reflexionsort zugeordnet sind. Es kann beispielsweise ein Empfänger-Array vorgesehen sein, wobei die einzelnen Array-Elemente beispielsweise kreisförmig angeordnet sind. Mittels dieses Empfänger-Arrays erfolgt eine Unterscheidung der verschiedenen Reflexionsorte, an denen die ausgesandte Strahlung im Erfassungsbereich reflektiert wird oder - genauer gesagt - reflektiert werden kann, sofern sich an der betreffenden Stelle im Erfassungsbereich ein die Abtaststrahlung reflektierender Gegenstand befindet. Hierbei sorgt die Abbildungsanordnung, beispielsweise eine Panoramalinse, folglich zu jedem Zeitpunkt für eine Abbildung des gesamten Erfassungsbereiches auf das Empfänger-Array. Beispielsweise zeitlich nacheinander in Richtung der Abbildungsanordnung ausgesandte Laserpulse werden somit jeweils über 360° verteilt in den Überwachungsbereich ausgesandt. Diese "Rundumsicht" der Erfassungsvorrichtung ermöglicht es, gleichzeitig die Entfernung von um die Erfassungsvorrichtung herum befindlichen Gegenständen zu messen, beispielsweise nach dem Lichtlaufzeitprinzip, wobei die Ortsauflösung durch das Empfänger-Array sichergestellt ist.

Bei einer solchen empfangsseitig wirksamen Ortsauflösung kann alternativ anstelle des beschriebenen Empfänger-Arrays ein einziger Strahlungsempfänger vorgesehen sein, der ausreichend groß ausgebildet und derart angeordnet ist, dass die Abbildungsanordnung den gesamten Erfassungsbereich auf dem Empfänger abbilden kann. Zur Unterscheidung der verschiedenen Reflexionsorte bzw. Erfassungsrichtungen, aus denen die im Erfassungsbereich reflektierte Strahlung einfällt, kann beispielsweise eine rotierende Blende vorgesehen sein, die zu jedem Zeitpunkt ausschließlich von dem jeweiligen Reflexionsort stammende bzw. unter dem jeweiligen Winkel einfallende reflektierte Strahlung durchlässt.

Eine weitere Möglichkeit zur Unterscheidung zwischen den einzelnen Reflexionsorten, also gewissermaßen zur "Ausblendung" aller zu einem bestimmten Zeitpunkt jeweils gerade nicht zu erfassenden Reflexionsorte und auch zur Ausblendung von Stör- bzw. Hintergrundstrahlung, besteht darin, empfangsseitig die Ausbreitungsrichtung der Strahlung zu beeinflussen. Hierzu ist erfindungsgemäß vorgesehen, dass die Empfangseinrichtung Beeinflussungsmittel zur zeitlich variierenden Beeinflussung der Ausbreitungsrichtung der Strahlung umfasst. Erfindungsgemäß sind die Beeinflussungsmittel im Ausbreitungsweg der Strahlung zwischen der Abbildungsanordnung und einem Empfänger der Empfangseinrichtung angeordnet. Auf konkrete Möglichkeiten zur Ausgestaltung derartiger Strahlungsbeeinflussungsmittel wird nachstehend näher eingegangen. Während vorstehend erwähnt wurde, dass in einer Variante der Erfindung der Erfassungsbereich zu einem Zeitpunkt vollständig mit der ausgesandten Strahlung beaufschlagt wird, indem beispielsweise die gesamte wirksame Fläche der Abbildungsanordnung "beleuchtet" wird, so dass für die gewünschte Ortsauflösung auf der Empfangsseite zu sorgen ist, kann in einer weiteren Variante der Erfindung zusätzlich oder alternativ auf der Sendeseite für die gewünschte Unterscheidung zwischen den verschiedenen Reflexionsorten gesorgt werden, d.h. die Ortsauflösungsmittel können sendeseitig wirksam sein.

Es kann eine Einrichtung vorgesehen sein, die in Bezug auf die Reflexionsorte zur selektiven Aussendung der Strahlung mittels der Sendeeinrichtung dient. Die Abbildungsanordnung wird hierbei folglich nicht mehr vollständig mit der Abtaststrahlung beaufschlagt. Vielmehr kann vorgesehen sein, insbesondere nach dem Prinzip eines herkömmlichen Scanners, die Abbildungsanordnung zu jedem Zeitpunkt mit lediglich einem einzigen Sendestrahl zu beaufschlagen, wobei die Richtung, unter welcher dieser Sendestrahl auf die Abbildungsanordnung trifft, zeitlich variiert wird.

Die Sendeeinrichtung umfasst erfindungsgemäß zusätzlich oder alternativ Beeinflussungsmittel zur zeitlich variierenden Beeinflussung der Ausbreitungsrichtung der Strahlung. Erfindungsgemäß sind die Beeinflussungsmittel im Ausbreitungsweg der Strahlung zwischen einem Sender der Sendeeinrichtung und der Abbildungsanordnung angeordnet.

Bei den vorstehend erwähnten Beeinflussungsmitteln, die sendeseitig und/oder empfangsseitig vorgesehen sein können, kann es sich insbesondere um zur Ausführung von Ablenkbewegungen ansteuerbare bewegliche, insbesondere rotierbare, optische Elemente handeln. Derartige optische Elemente sind beispielsweise Spiegel, Prismen oder Keile. Bei den Beeinflussungsmitteln kann es sich auch um diffraktive Optiken handeln, die beispielsweise zur Veränderung ihres strahlungsbrechenden Verhaltens elektrisch ansteuerbar sind.

Derartige Beeinflussungsmittel sind grundsätzlich bekannt. In einem besonders bevorzugten Ausführungsbeispiel wird sendeseitig und/oder empfangsseitig jeweils wenigstens ein so genannter mikromechanischer Spiegel (MEMS) eingesetzt.

Die Erfindung ermöglicht es folglich, die für die Umgebungserfassung zu bewegenden Massen zu minimieren. Ein Sender, beispielsweise eine Laserquelle, der Sendeeinrichtung, ein Empfänger, beispielsweise ein oder mehrere Fotodioden, der Empfangseinrichtung sowie die Abbildungsanordnung, die beispielsweise zwei Panoramalinsen oder omnidirektionale Linsen umfasst, von denen die eine der Sendeeinrichtung und die andere der Empfangseinrichtung zugeordnet ist, können in Bezug auf eine Basis der Erfassungsvorrichtung, d.h. bezüglich eines fest mit der Erfassungsvorrichtung verbundenen Koordinatensystems, unbeweglich angeordnet sein.

Gemäß einem weiteren Aspekt betrifft die Erfindung die Verwendung einer Abbildungsanordnung, die zu jedem Zeitpunkt einen Erfassungsbereich sendeseitig und/oder empfangsseitig vollständig abdeckt, insbesondere einer Panoramalinse, einer omnidirektionalen Linse oder eines zumindest teilkegelförmigen Spiegels, in einer Vorrichtung zur ortsaufgelösten Erfassung von in einem Überwachungsbereich befindlichen Gegenständen, insbesondere eine Vorrichtung der vorstehend erläuterten Art, wobei die Vorrichtung eine Sendeeinrichtung zur Aussendung von elektromagnetischer Strahlung in einem Sendebereich und eine Empfangseinrichtung zum Empfang von aus einem Empfangsbereich reflektierter Strahlung umfasst, wobei sich der Sendebereich und der Empfangsbereich in dem innerhalb des Überwachungsbereichs liegenden und einen Erfassungswinkel abdeckenden Erfassungsbereich überlappen oder schneiden, in welchem die ausgesandte Strahlung von Gegenständen reflektiert wird bzw. reflektiert werden kann, wobei die Abbildungsanordnung im Ausbreitungsweg der ausgesandten Strahlung und/oder der reflektierten Strahlung gelegen ist, und wobei die Vorrichtung Ortsauflösungsmittel zur Unterscheidung der reflektierten Strahlung hinsichtlich des Reflexionsortes umfasst.

Generell ist die Erfindung in vielfältiger Weise einsetzbar, beispielsweise in Fahrzeuganwendungen und in industriellen Anwendungen.

Mögliche Ausführungsformen der Erfindung sind vorstehend bereits erläutert worden und auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1a und 1b: schematisch verschiedene Ansichten eines Ausfüh- rungsbeispiels einer Abbildungseinrichtung für eine er- findungsgemäße Erfassungsvorrichtung, und
- Fig. 2 bis 5: schematisch unterschiedliche Ausführungsformen einer erfindungsgemäßen Erfassungsvorrichtung.

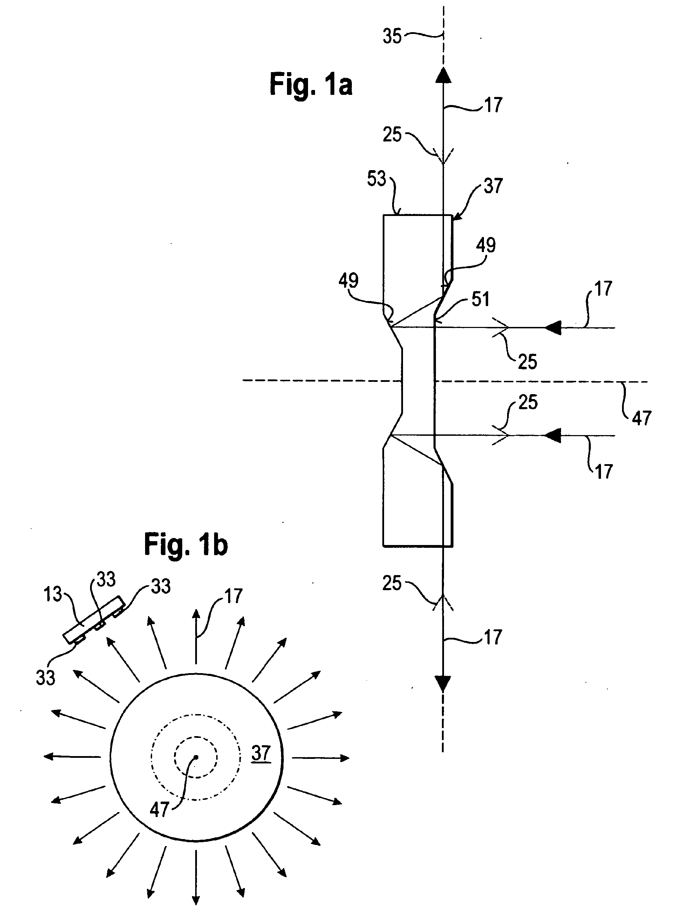

Die in den Fig. 1a und 1b schematisch dargestellte Panoramalinse 37, die als eine Abbildungseinrichtung in einer erfindungsgemäßen Erfassungsvorrichtung zum Einsatz kommen kann, ist bezüglich einer Achse 47 rotationssymmetrisch ausgebildet. Über eine Strahlungseintrittsfläche 51, die einem nicht dargestellten Sender, beispielsweise einer Laserquelle, zugewandt ist, einfallende Strahlung 17 wird innerhalb der Linse 37 zunächst an einer ersten Fläche 49 und dann an einer zweiten Fläche 49 reflektiert. Die Strahlung 17 tritt über einen Winkelbereich von 360° (Fig. 1b) aus der Linse 37 über eine umlaufende Austrittsfläche 53 aus. Der Strahlungsverlauf ist in Fig. 1a lediglich angedeutet und nicht physikalisch korrekt wiedergegeben. Die erwähnten Flächen sind in Fig. 1b durch gestrichelte bzw. strichpunktierte Linien lediglich angedeutet.

Folglich wird mit der Panoramalinse 37 der Sender bzw. die ausgesandte Strahlung 17 auf einen 360° umfassenden Sendebereich abgebildet. Es erfolgt eine Umlenkung der ausgesandten Strahlung 17 um 90°. Die die Linse 37 verlassende Strahlung 17 breitet sich in einer Sendeebene 35 aus, die senkrecht zur optischen Achse 47 der Linse 39 verläuft.

Gestrichelt ist in Fig. 1a der umgekehrte Strahlungsverlauf angedeutet. Die Panoramalinse 37 ist dann empfangsseitig wirksam, wobei aus einem 360° umfassenden Empfangsbereich einfallende Strahlung 25 auf einen nicht dargestellten Empfänger abgebildet werden kann.

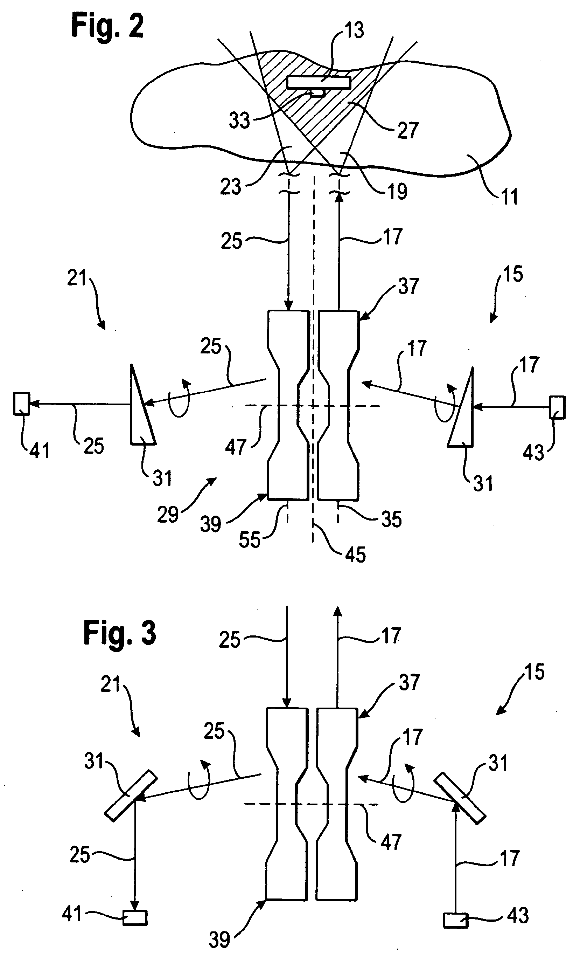

Die in den Fig. 2 bis 5 dargestellten Ausführungsbeispiele einer erfindungsgemäßen Erfassungsanordnung haben gemeinsam, dass jeweils zwei Panoramalinsen 37, 39, wie sie in Fig. 1a und 1b gezeigt sind, vorgesehen sind. Eine erste Linse 37 ist einer einen Sender 43, beispielsweise eine Laserquelle, umfassenden Sendeeinrichtung 15 zugeordnet, während eine zweite Linse 39 einer Empfangseinrichtung 21 zugeordnet ist, die einen Empfänger 41 z.B. in Form einer Fotodiode umfasst.

Die Ausführungsformen der Fig. 2 bis 5 unterscheiden sich durch die Ausgestaltung von Strahlungsbeeinflussungsmitteln 31, worauf nachstehend näher eingegangen wird.

Im Ausführungsbeispiel der Fig. 2 ist die Funktionsweise der erfindungsgemäßen Erfassungsvorrichtung näher angedeutet. In einem Überwachungsbereich 11 befindet sich ein Gegenstand 13. Unter anderem aufgrund der Abbildungseigenschaften der Sendelinse 37 erfolgt eine Aufweitung der ausgesandten Strahlung 17. Die Linse 37 besitzt beispielsweise einen austrittsseitig wirksamen Öffnungswinkel von etwa 30°. Die Aussendung der Strahlung 17 erfolgt somit in einem sich in radialer Richtung aufweitenden, 360° um die Sendelinse 37 herum abdeckenden Sendebereich 19. Dabei liegt die Sendestrahlung 17 in einer Sendeebene 35, die senkrecht zu einer gemeinsamen optischen Achse 47 der von den beiden Linsen 37, 39 gebildeten Abbildungsanordnung 29 verläuft. Entsprechend besitzt die zur Sendelinse 37 baugleiche Empfangslinse 39 einen Empfangsbereich 23. Die Anordnung der beiden Linsen 37, 39 ist derart gewählt, dass ab einer gewünschten Messentfernung der Sendebereich 19 und der Empfangsbereich 23 einander überlappen bzw. schneiden. Hierdurch ergibt sich ein gestrichelt dargestellter Erfassungsbereich 27, in welchem die erfindungsgemäße Erfassungsvorrichtung Gegenstände 13 detektieren kann.

Diese Situation ist in Fig. 2 schematisch in einer Ebene dargestellt, welche die gemeinsame optische Achse 47 der beiden Linsen 37, 39 enthält. Bei dem Erfassungsbereich 27 handelt es sich folglich um einen bezüglich der Achse 47 rotationssymmetrischen Bereich der Umgebung der Erfassungsvorrichtung, der sich um 360° um die Abbildungsanordnung 29 bzw. deren Achse 47 herum erstreckt. Die ausgesandte Strahlung 17 wird von dem Gegenstand 13 an so genannten Reflexionsorten 33 reflektiert, von denen in Fig. 2 lediglich einer dargestellt ist.

Die Empfangslinse 39 ist in umgekehrter Strahlungsausbreitungsrichtung wirksam. Die aus den Erfassungsbereich 27 in einer Empfangsebene 55 reflektierte Strahlung 25 wird von der Empfangslinse 39 auf den Empfänger 41 abgebildet. In optischer Hinsicht ist die Erfassungsvorrichtung somit hinsichtlich des generellen Grundaufbaus symmetrisch bezüglich einer die Sendeseite von der Empfangsseite trennenden Ebene 45 ausgelegt, die senkrecht zur Achse 47 verläuft.

Um mittels der Sendelinse 37 die Strahlung 17 in unterschiedliche Richtungen auszusenden, ist im Ausbreitungsweg der Strahlung 17 zwischen dem Sender 43 und der Sendelinse 37 ein optisch wirksames Element 31 angeordnet. Im Ausführungsbeispiel der Fig. 2 handelt es sich hierbei um einen rotierenden optischen Keil. Der aus dem Keil 31 austretende Laserstrahl 17 bewegt sich auf einem Kegelmantel, so dass der aus der Sendelinse 37 austretende Laserstrahl 17 um die Achse 47 rotiert und folglich den gesamten Erfassungsbereich 27 überstreicht.

Sendeseitig ist somit ein Laserscanner realisiert, wobei allerdings die für die Ablenkung in den Erfassungsbereich 27 sorgende Linse 37 stationär angeordnet ist. Es ist lediglich erforderlich, den optischen Keil 31 in Rotation zu versetzen. Durch dieses sendeseitige Scannen ist die gewünschte Ortsauflösung trotz der zu jedem Zeitpunkt gegebenen vollständigen Abdeckung des Erfassungsbereiches 27 durch die Sendelinse 37 gewährleistet.

Aufgrund der vorstehend erwähnten prinzipiellen symmetrischen Ausgestaltung der Erfassungsvorrichtung ist auch empfangsseitig im Ausbreitungsweg der reflektierten Strahlung 25 zwischen der Empfangslinse 39 und dem Empfänger 41 ein rotierender optischer Keil 31 angeordnet. Der sendeseitige Keil 31 und der empfangsseitige Keil 41 sind derart hinsichtlich ihrer Rotationsbewegungen miteinander synchronisiert, dass jeweils ein in den Erfassungsbereich 27 ausgesandter Laserstrahl nach Reflexion an einem Gegenstand 13 mittels der Empfangslinse 39 auf dem Empfänger 41 abgebildet wird. Diese empfangsseitige Selektivität stellt in vorteilhafter Weise sicher, dass auf die Empfangslinse 39 treffende Störstrahlung ausgeblendet wird, d.h. nicht auf den Empfänger 41 gelangt. Diese Hintergrundausblendung ist nicht zwingend. Alternativ ist es möglich, auf die empfangsseitig vorgesehene zeitlich variierende Beeinflussung der Ausbreitungsrichtung der reflektierten Strahlung 25 mittels des rotierenden Keils 31 zu verzichten. Es kann stattdessen z.B. ein großflächigerer Empfänger vorgesehen sein, auf den zu jedem Zeitpunkt der gesamte Erfassungsbereich 27 mittels der Empfangslinse 39 abgebildet wird. Aufgrund der erwähnten Störstrahlung oder Hintergrundstrahlung könnte sich allerdings ein gegenüber der in Fig. 2 dargestellten Anordnung verschlechterter Rausch-/Signalabstand ergeben.

Zur Bestimmung der Entfernung des Gegenstands 13 von der Erfassungsvorrichtung ist beispielsweise eine Einrichtung zur Laufzeitmessung vorgesehen. Hierbei wird die Zeit gemessen, welche die Laserstrahlung benötigt, um den Weg von der Sendeeinrichtung 15 zum Gegenstand 13 und als reflektierte Strahlung 25 zurück zur Empfangseinrichtung 21 zurückzulegen. Insofern können für die erfindungsgemäße Erfassungsvorrichtung grundsätzlich alle herkömmlichen Methoden zur Entfernungsmessung eingesetzt werden, wie sie z.B. in Bezug auf existierende Laserscanner bekannt sind. Auf die eigentliche Entfernungsmessung, die dem Fachmann somit bekannt ist, braucht daher nicht näher eingegangen zu werden.

Das sendeseitige Scannen und die empfangsseitige Hintergrundausblendung sind auch in den Ausführungsbeispielen der Fig. 3, 4 und 5 vorgesehen, wobei hierfür aber jeweils unterschiedliche Mittel eingesetzt werden.

In dem Ausführungsbeispiel der Fig. 3 sind der Sender 43 und der Empfänger 41 außerhalb der gemeinsamen optischen Achse 47 der Sendelinse 37 und der Empfangslinse 39 angeordnet. Die hier anstelle der rotierenden optischen Keile gemäß Fig. 2 vorgesehenen Strahlungsbeeinflussungsmittel in Form der Ablenkeinrichtungen 31 sorgen nicht nur für die Rotation der ausgesandten Strahlung 17 bzw. reflektierten Strahlung 25, sondern korrigieren außerdem die erwähnte Abweichung von der optischen Achse 47. Als Ablenkeinrichtungen können hier beispielsweise die bereits erwähnten mikromechanischen Spiegel 31 (MEMS) eingesetzt werden. Als Alternative zu diesen beweglichen Spiegeln 31 können auch elektrisch steuerbare diffraktive Optiken verwendet werden, wie sie ebenfalls grundsätzlich bekannt sind. Des Weiteren sind auch motorisch angetriebene taumelnde Spiegel als Beeinflussungsmittel 31 einsetzbar.

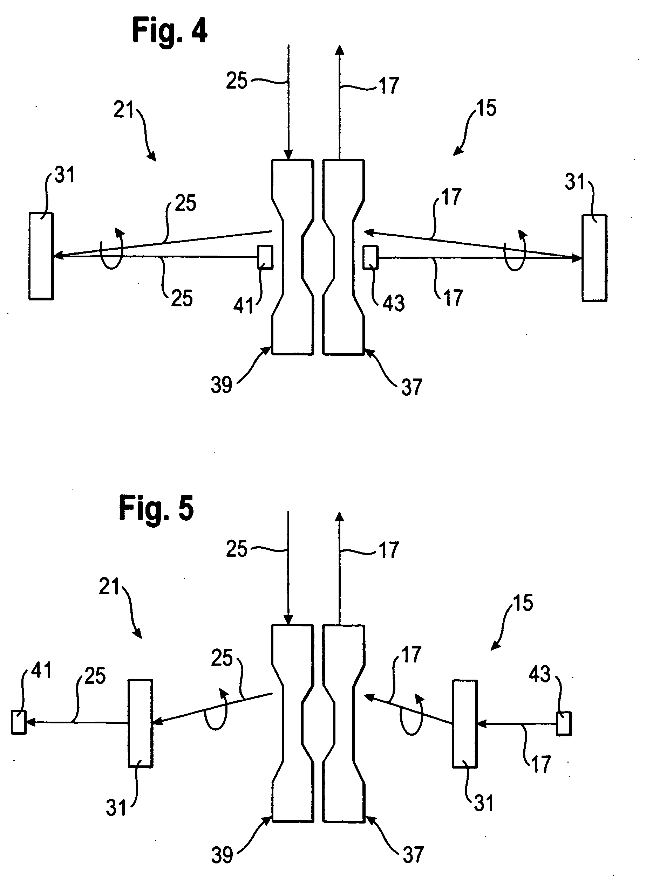

Bei der zentralen Anordnung der optischen Komponenten gemäß Fig. 4 existiert sowohl sendeseitig als auch empfangsseitig jeweils ein so genannter "blinder Fleck", der für die jeweilige Abbildung nicht benötigt wird. Dieser Umstand wird hier dazu genutzt, den Sender 43 und den Empfänger 41 auf der optischen Achse nahe der jeweiligen Linse 37 bzw. Linse 39 anzuordnen. Hierdurch sind die aktiven Flächen des Senders 43 und des Empfängers 41 von der jeweiligen Linse 37 bzw. Linse 39 abgewandt. Die Brennweite des von den Linsen 37, 39 gebildeten optischen Systems bestimmt den Abstand, in welchem die Strahlungsbeeinflussungsmittel 31 angeordnet sind. Bei diesen kann es sich beispielsweise um die bereits erwähnten mikromechanischen Spiegel (MEMS) handeln. Diese sorgen dafür, dass der Sendestrahl 17 bzw. das Blickfeld, aus welchem die reflektierte Strahlung 25 einfällt, kreisförmig auf den relevanten Bereich der jeweiligen Linse 37 bzw. Linse 39 abgelenkt wird.

Das Ausführungsbeispiel der Fig. 5 zeigt ebenfalls eine zentrale Anordnung der optoelektronischen Bauteile. Die Ablenkung der Senderichtung bzw. Blickrichtung erfolgt hierbei durch elektrisch steuerbare diffraktive Optiken 31, wie sie ebenfalls bereits erwähnt wurden. In dieser Anordnung befinden sich der Sender 43 und der Empfänger 41 jeweils im Brennpunkt der zugehörigen Linse 37 bzw. Linse 39.

### Bezugszeichenliste

- 11: Überwachungsbereich
- 13: Gegenstand
- 15: Sendeeinrichtung
- 17: ausgesandte Strahlung
- 19: Sendebereich
- 21: Empfangseinrichtung
- 23: Empfangsbereich
- 25: reflektierte Strahlung
- 27: Erfassungsbereich
- 29: Abbildungsanordnung
- 31: Ortsauflösungsmittel
- 33: Reflexionsort
- 35: Sendeebene
- 37: Abbildungseinrichtung
- 39: Abbildungseinrichtung
- 41: Empfänger
- 43: Sender
- 45: Symmetrieebene
- 47: Achse der Abbildungsanordnung
- 49: Reflexionsfläche
- 51: Eintrittsfläche
- 53: Austrittsfläche
- 55: Empfangsebene

## Patentansprüche

1. Vorrichtung zur ortsaufgelösten Erfassung von in einem Überwachungsbereich (11) befindlichen Gegenständen (13),
mit einer Sendeeinrichtung (15) zur Aussendung von elektromagnetischer Strahlung (17) in einem Sendebereich (19),
mit einer Empfangseinrichtung (21) zum Empfang von aus einem Empfangsbereich (23) reflektierter Strahlung (25),
wobei sich der Sendebereich (19) und der Empfangsbereich (23) in einem innerhalb des Überwachungsbereiches (11) gelegenen und einen Erfassungswinkel abdeckenden Erfassungsbereich (27) überlappen oder schneiden, in welchem die ausgesandte Strahlung (17) von Gegenständen (13) reflektiert wird,
mit einer im Ausbreitungsweg der ausgesandten Strahlung (17) und/oder der reflektierten Strahlung (25) gelegenen Abbildungsanordnung (29), die zu jedem Zeitpunkt den gesamten Erfassungsbereich (27) sendeseitig und/oder empfangsseitig abdeckt, und mit Ortsauflösungsmitteln (31) zur Unterscheidung der reflektierten Strahlung (25) hinsichtlich des Reflexionsortes (33),
**dadurch gekennzeichnet,**
**dass** die Empfangseinrichtung (21) als Ortsauflösungsmittel (31) ausgebildete Strahlungsbeeinflussungsmittel (31) zur zeitlich variierenden Beeinflussung der Ausbreitungsrichtung der reflektierten Strahlung (25) umfasst, wobei die Strahlungsbeeinflussungsmittel (31) im Ausbreitungsweg der Strahlung (25) zwischen der Abbildungsanordnung (29) und einem Empfänger (41) der Empfangseinrichtung (21) angeordnet sind, und/oder
**dass** die Sendeeinrichtung (15) als Ortsauflösungsmittel (31) ausgebildete Strahlungsbeeinflussungsmittel (31) zur zeitlich variierenden Beeinflussung der Ausbreitungsrichtung der Strahlung (17) umfasst, wobei die Strahlungsbeeinflussungsmittel (31) im Ausbreitungsweg der Strahlung (17) zwischen einem Sender (43) der Sendeeinrichtung (15) und der Abbildungsanordnung (29) angeordnet sind.

2. Vorrichtung nach Anspruch 1,
**dadurch gekennzeichnet,**
**dass** der Erfassungsbereich (27) eine Mehrzahl von möglichen Reflexionsorten (33) umfasst.

3. Vorrichtung nach Anspruch 1 oder 2,
**dadurch gekennzeichnet,**
**dass** der Erfassungswinkel zumindest in einer Sendeebene (35) wenigstens 90°, vorzugsweise wenigstens 180° und insbesondere bevorzugt 360° beträgt.

4. Vorrichtung nach einem der vorhergehenden Ansprüche,
**dadurch gekennzeichnet,**
**dass** sie als Entfernungsmesser ausgebildet ist, wobei insbesondere für jeden Reflexionsort (33) ein Entfernungswert bestimmbar ist.

5. Vorrichtung nach einem der vorhergehenden Ansprüche,
**dadurch gekennzeichnet,**
**dass** sie zur Entfernungsmessung nach dem Laufzeitmessprinzip und/oder nach dem Phasenmessprinzip ausgebildet ist.

6. Vorrichtung nach einem der vorhergehenden Ansprüche,
**dadurch gekennzeichnet,**
**dass** sie als ein Laserscanner ausgebildet ist, der den Empfangsbereich (27) zeitlich gepulst oder kontinuierlich abtastet.

7. Vorrichtung nach einem der vorhergehenden Ansprüche,
**dadurch gekennzeichnet ,**
**dass** die Sendeeinrichtung (15) zur Aussendung der Strahlung (17) in wenigstens einer Sendeebene (35) ausgebildet ist.

8. Vorrichtung nach einem der vorhergehenden Ansprüche,
**dadurch gekennzeichnet ,**
**dass** die Abbildungsanordnung (29) zur Umlenkung der ausgesandten Strahlung (17) und/oder der reflektierten Strahlung (25) ausgebildet ist.

9. Vorrichtung nach einem der vorhergehenden Ansprüche,
**dadurch gekennzeichnet ,**
**dass** die Abbildungsanordnung (29) wenigstens ein optisch wirksames Element umfasst, insbesondere eine Panoramalinse und/oder eine omnidirektionale Linse, oder eine Strahlungsreflexionsfläche, bevorzugt einen zumindest teilkegelförmigen Spiegel.

10. Vorrichtung nach einem der vorhergehenden Ansprüche,
**dadurch gekennzeichnet,**
**dass** die Abbildungsanordnung (29) eine gemeinsame Abbildungseinrichtung umfasst, die sowohl sendeseitig als auch empfangsseitig wirksam ist.

11. Vorrichtung nach einem der Ansprüche 1 bis 9,
**dadurch gekennzeichnet,**
**dass** die Abbildungsanordnung (29) sowohl sendeseitig als auch empfangsseitig jeweils eine separate Abbildungseinrichtung (37, 39) umfasst, wobei insbesondere die Abbildungseinrichtungen (37, 39) baugleich sind.

12. Vorrichtung nach einem der vorhergehenden Ansprüche,
**dadurch gekennzeichnet,**
**dass** die Ortsauflösungsmittel (31) empfangsseitig wirksam sind, wobei insbesondere die Sendeeinrichtung (15) dazu ausgebildet ist, zu einem Zeitpunkt den gesamten Erfassungsbereich (27) mit ausgesandter Strahlung (17) zu beaufschlagen, insbesondere mittels der Abbildungsanordnung (29).

13. Vorrichtung nach einem der vorhergehenden Ansprüche,
**dadurch gekennzeichnet,**
**dass** die Empfangseinrichtung (21) einen Empfänger (41) umfasst, der in eine Mehrzahl von Einzelempfängern unterteilt ist, die jeweils wenigstens einem Reflexionsort (33) zugeordnet sind.

14. Vorrichtung nach einem der vorhergehenden Ansprüche,
**dadurch gekennzeichnet,**
**dass** eine Einrichtung vorgesehen ist, die in bezug auf die Reflexionsorte (33) zur selektiven Erfassung der reflektierten Strahlung (25) mittels der Empfangseinrichtung (21) dient.

15. Vorrichtung nach einem der vorhergehenden Ansprüche,
**dadurch gekennzeichnet,**
**dass** im Ausbreitungsweg der reflektierten Strahlung (25) zwischen der Abbildungsanordnung (29) und einem Empfänger (41) der Empfangseinrichtung (21) eine bewegliche Blende angeordnet ist.

16. Vorrichtung nach einem der vorhergehenden Ansprüche,
**dadurch gekennzeichnet,**
**dass** die Ortsauflösungsmittel (31) sendeseitig wirksam sind.

17. Vorrichtung nach einem der vorhergehenden Ansprüche,
**dadurch gekennzeichnet,**
**dass** eine Einrichtung (31) vorgesehen ist, die in Bezug auf die Reflexionsorte (33) zur selektiven Aussendung der Strahlung (17) mittels der Sendeeinrichtung (15) dient.

18. Vorrichtung nach einem der vorhergehenden Ansprüche,
**dadurch gekennzeichnet,**
**dass** die Strahlungsbeeinflussungsmittel (31) wenigstens ein zur Ausführung von Ablenkbewegungen ansteuerbares bewegliches optisches Element, insbesondere einen Spiegel, ein Prisma oder einen Keil, und/oder zumindest eine zur Veränderung des strahlungsbrechenden Verhaltens ansteuerbare diffraktive Optik umfassen.

19. Vorrichtung nach einem der vorhergehenden Ansprüche,
**dadurch gekennzeichnet,**
**dass** sie in Bezug auf eine die Sendeseite von der Empfangsseite trennende Ebene (45) zumindest hinsichtlich der prinzipiellen Funktionsweise symmetrisch aufgebaut ist.

20. Verwendung einer Abbildungsanordnung (29),
die zu jedem Zeitpunkt einen Erfassungsbereich (27) sendeseitig und/oder empfangsseitig vollständig abdeckt,
insbesondere einer Panoramalinse, einer omnidirektionalen Linse oder eines zumindest teilkegelförmigen Spiegels,
in einer Vorrichtung zur ortsaufgelösten Erfassung von in einem Überwachungsbereich (11) befindlichen Gegenständen (13), insbesondere einer Vorrichtung nach einem der vorhergehenden Ansprüche,
wobei die Vorrichtung eine Sendeeinrichtung (15) zur Aussendung von elektromagnetischer Strahlung (17) in einem Sendebereich (19) und eine Empfangseinrichtung (21) zum Empfang von aus einem Empfangsbereich (23) reflektierter Strahlung (25) umfasst, wobei sich der Sendebereich (19) und der Empfangsbereich (23) in dem innerhalb des Überwachungsbereiches (11) gelegenen und einen Erfassungswinkel abdeckenden Erfassungsbereich (27) überlappen oder schneiden, in welchem die ausgesandte Strahlung (17) von Gegenständen (13) reflektiert wird,
wobei die Abbildungsanordnung (29) im Ausbreitungsweg der ausgesandten Strahlung (17) und/oder der reflektierten Strahlung (25) gelegen ist, und
wobei die Vorrichtung Ortsauflösungsmittel (31) zur Unterscheidung der reflektierten Strahlung (25) hinsichtlich des Reflexionsortes (33) umfasst,
**dadurch gekennzeichnet,**
**dass** die Empfangseinrichtung (21) als Ortsauflösungsmittel (31) ausgebildete Strahlungsbeeinflussungsmittel (31) zur zeitlich variierenden Beeinflussung der Ausbreitungsrichtung der reflektierten Strahlung (25) umfasst, wobei die Strahlungsbeeinflussungsmittel (31) im Ausbreitungsweg der Strahlung (25) zwischen der Abbildungsanordnung (29) und einem Empfänger (41) der Empfangseinrichtung (21) angeordnet sind, und/oder
**dass** die Sendeeinrichtung (15) als Ortsauflösungsmittel (31) ausgebildete Strahlungsbeeinflussungsmittel (31) zur zeitlich variierenden Beeinflussung der Ausbreitungsrichtung der Strahlung (17) umfasst, wobei die Strahlungsbeeinflussungsmittel (31) im Ausbreitungsweg der Strahlung (17) zwischen einem Sender (43) der Sendeeinrichtung (15) und der Abbildungsanordnung (29) angeordnet sind.

## Claims

1. An apparatus for the spatially resolved detection of objects (13) located in a monitored zone (11),
having a transmission device (15) for the transmission of electromagnetic radiation (17) into a transmission region (19); having a reception device (21) for the reception of radiation (25) reflected from a reception region (23),
wherein the transmission region (19) and the reception region (23) overlap or intersect in a detection region (27) which is disposed within the monitored zone (11), which covers a detection angle and in which the transmitted radiation (17) is reflected from objects (13), having an imaging arrangement (29) which is disposed in the propagation path of the transmitted radiation (17) and/ or of the reflected radiation (25) and which covers the total detection region (27) at the transmission side and/or at the reception side at all times; and
having spatial resolution means (31) for distinguishing the reflected radiation (25) with respect to the reflection location (33), **characterised in that**
the reception device (21) includes radiation influencing means (31) formed as spatial resolution means (31) for the time-varying influencing of the direction of propagation of the reflected radiation (25), with the radiation influencing means (31) being arranged between the imaging arrangement (29) and a receiver (41) of the reception device (21) in the propagation path of the radiation (25); and/or
**in that** the transmission device (15) includes radiation influencing means (31) formed as spatial resolution means (31) for the time-varying influencing of the direction of propagation of the radiation (17), with the radiation influencing means (31) being arranged between a transmitter (43) of the transmission device (15) and the imaging arrangement (29) in the propagation path of the radiation (17).

2. An apparatus in accordance with claim 1,
**characterised in that**
the detection region (27) includes a plurality of possible reflection locations (33).

3. An apparatus in accordance with claim 1 or 2,
**characterised in that**
the detection angle amounts to at least 90°, preferably to at least 180°, and in particular preferably 360°, in at least one transmission plane (35).

4. An apparatus in accordance with any one of the preceding claims,
**characterised in that**
it is designed as a distance measurement device, with a distance value in particular being able to be determined for each reflection location (33).

5. An apparatus in accordance with any one of the preceding claims,
**characterised in that**
it is designed for distance measurement in accordance with the transit time measurement principle and/or in accordance with the phase measurement principle.

6. An apparatus in accordance with any one of the preceding claims,
**characterised in that**
it is designed as a laser scanner which scans the reception region (27) in a time-pulsed or continuous manner.

7. An apparatus in accordance with any one of the preceding claims,
**characterised in that**
the transmission device (15) is designed for transmitting the radiation (17) in at least one transmission plane (35).

8. An apparatus in accordance with any one of the preceding claims,
**characterised in that**
the imaging arrangement (29) is designed for deflecting the transmitted radiation (17) and/or the reflected radiation (25).

9. An apparatus in accordance with any one of the preceding claims,
**characterised in that**
the imaging arrangement (29) includes at least one optically effective element, in particular a panoramic lens and/or an omnidirectional lens, or a radiation reflection surface, preferably an at least partly conical mirror.

10. An apparatus in accordance with any one of the preceding claims,
**characterised in that**
the imaging arrangement (29) includes a common imaging device which is effective both at the transmission side and at the reception side.

11. An apparatus in accordance with any one of the claims 1 to 9,
**characterised in that**
the imaging arrangement (29) includes a separate imaging device (37, 39) both at the transmission side and at the reception side, with in particular the imaging devices (37, 39) being of the same construction.

12. An apparatus in accordance with any one of the preceding claims,
**characterised in that**
the spatial resolution means (31) are effective at the reception side, with in particular the transmission device (15) being designed to apply transmitted radiation (17) to the total detection region (27) at one point in time, in particular by means of the imaging arrangement (29).

13. An apparatus in accordance with any one of the preceding claims,
**characterised in that**
the reception device (31) includes a receiver (41) which is divided into a plurality of individual receivers which are each associated with at least one reflection location (33).

14. An apparatus in accordance with any one of the preceding claims,
**characterised in that**
a device is provided which serves for the selection detection of the reflected radiation (25) by means of the reception device (21) with respect to the reflection locations (33).

15. An apparatus in accordance with any one of the preceding claims,
**characterised in that**
a movable diaphragm is arranged between the imaging arrangement (29) and a receiver (41) of the reception device (21) in the propagation path of the reflected radiation (25).

16. An apparatus in accordance with any one of the preceding claims,
**characterised in that**
the spatial resolution means (31) are effective at the transmission side.

17. An apparatus in accordance with any one of the preceding claims,
**characterised in that**
a device (31) is provided which serves for the selective transmission of the radiation (17) by means of the transmission device (15) with respect to the reflection locations (33).

18. An apparatus in accordance with any one of the preceding claims,
**characterised in that**
the radiation influencing means (31) include at least one movable optical element controllable for carrying out deflection movements, in particular a mirror, a prism or a wedge, and/or at least one diffractive optics controllable for changing the radiation-refraction behaviour.

19. An apparatus in accordance with any one of the preceding claims,
**characterised in that**
it is designed symmetrically with respect to a plane (45) separating the transmission side from the reception side at least with respect to the basic operation.

20. Use of an imaging arrangement (29),
which completely covers a detection region (27) at the transmission side and/or at the reception side at all times,
in particular of a panoramic lens, of an omnidirectional lens or of at least one partly conical mirror,
in an apparatus for the spatially resolved detection of objects (13) located in a monitored zone (11), in particular in an apparatus in accordance with any one of the preceding claims,
wherein the apparatus includes a transmission device (15) for the transmission of electromagnetic radiation (17) in a transmission region (19) and a reception device (21) for the reception of radiation (25) reflected from a reception region (23), wherein the transmission region (19) and the reception region (23) overlap or intersect in the detection region (27) which is disposed within the monitored zone (11), which covers a detection angle and in which the transmitted radiation (17) is reflected by objects (13);
wherein the imaging arrangement (29) is disposed in the propagation path of the transmitted radiation (17) and/or of the reflected radiation (25); and
wherein the apparatus includes spatial resolution means (31) for distinguishing the reflected radiation (25) with respect to the reflection location (33),
**characterised in that**
the reception device (21) includes radiation influencing means (31) formed as spatial resolution means (31) for the time-varying influencing of the direction of propagation of the reflected radiation (25), with the radiation influencing means (31) being arranged between the imaging arrangement (29) and a receiver (41) of the reception device (21) in the propagation path of the radiation (25); and/or
**in that** the transmission device (15) includes radiation influencing means (31) formed as spatial resolution means (31) for the time-varying influencing of the direction of propagation of the radiation (17), with the radiation influencing means (31) being arranged between a transmitter (43) of the transmission device (15) and the imaging arrangement (29) in the propagation path of the radiation (17).

## Revendications

1. Dispositif pour la détection en résolution locale d'objets (13) qui se trouvent dans une zone de surveillance (11),
comprenant un système émetteur (15) pour émettre un rayonnement électromagnétique (17) dans une zone d'émission (19),
comprenant un système récepteur (21) pour recevoir un rayonnement (25) réfléchi depuis une zone de réception (23),
la zone d'émission (19) et la zone de réception (23) se chevauchent ou se recoupent dans une zone de détection (27), située à l'intérieur de la zone de surveillance (11) et couvrant un angle de détection, dans laquelle le rayonnement émis (17) est réfléchi par des objets (13),
comprenant un agencement d'imagerie (29) situé dans le trajet de propagation du rayonnement émis (17) et/ou du rayonnement réfléchi (25), qui couvre à chaque instant la totalité de la zone de détection (27) du côté émission et/ou du côté réception, et
comprenant des moyens à résolution locale (31) pour distinguer le rayonnement réfléchi (25) pour ce qui concerne le lieu de réflexion (33),
**caractérisé en ce que**
le système récepteur (21) comprend, des moyens destinés à influencer le rayonnement (31), réalisés à titre de moyens à résolution locale (31), afin d'influencer de manière variable dans le temps la direction de propagation du rayonnement réfléchi (25), les moyens destinés à influencer le rayonnement (31) étant agencés dans le trajet de propagation du rayonnement (25) entre l'agencement d'imagerie (29) et un récepteur (41) du système récepteur (21), et/ou
**en ce que** le système émetteur (15) comprend des moyens destinés à influencer le rayonnement (31), réalisés à titre de moyens à résolution locale (31), afin d'influencer de manière variable dans le temps la direction de propagation du rayonnement (17), les moyens destinés à influencer le rayonnement (31) étant agencés dans le trajet de propagation du rayonnement (17) entre un émetteur (43) du système émetteur (15) et l'agencement d'imagerie (29).

2. Dispositif selon la revendication 1,
**caractérisé en ce que** le la zone de détection (27) inclut une pluralité de lieux de réflexion possibles (33).

3. Dispositif selon la revendication 1 ou 2,
**caractérisé en ce que** l'angle de détection, au moins dans un plan d'émission (35), s'élève à au moins 90°, de préférence à au moins 180°, et en particulier de manière préférée à 360°.

4. Dispositif selon l'une des revendications précédentes,
**caractérisé en ce qu'**il est réalisé à titre d'appareil de mesure d'éloignement, et en particulier **en ce qu'**une valeur d'éloignement peut être déterminée pour chaque lieu de réflexion (33).

5. Dispositif selon l'une des revendications précédentes,
**caractérisé en ce qu'**il est réalisé en vue de la mesure d'éloignement selon le principe de mesure du temps de parcours et/ou selon le principe de mesure de phase.

6. Dispositif selon l'une des revendications précédentes,
**caractérisé en ce qu'**il est réalisé comme un scanner à laser qui palpe la zone de réception (27) de manière pulsée dans le temps ou de manière continue.

7. Dispositif selon l'une des revendications précédentes,
**caractérisé en ce que** le système émetteur (15) est réalisé pour émettre le rayonnement (17) dans au moins un plan d'émission (35).

8. Dispositif selon l'une des revendications précédentes,
**caractérisé en ce que** l'agencement d'imagerie (29) est réalisé pour dévier le rayonnement émis (17) et/ou le rayonnement réfléchi (25).

9. Dispositif selon l'une des revendications précédentes,
**caractérisé en ce que** l'agencement d'imagerie (29) comprend au moins un élément optiquement actif, en particulier une lentille panorama et/ou une lentille omnidirectionnelle, ou une surface de réflexion de rayonnement, de préférence un miroir de forme au moins partiellement conique.

10. Dispositif selon l'une des revendications précédentes,
**caractérisé en ce que** l'agencement d'imagerie (29) comprend un système d'imagerie commun qui est actif aussi bien du côté émission que du côté réception.

11. Dispositif selon l'une des revendications 1 à 9,
**caractérisé en ce que** l'agencement d'imagerie (29) comprend aussi bien du côté émission que du côté réception respectivement un système d'imagerie séparé (37, 39), et les systèmes d'imagerie (37, 39) sont en particulier de même construction.

12. Dispositif selon l'une des revendications précédentes,
**caractérisé en ce que** les moyens à résolution locale (31) sont actifs du côté réception, et le système émetteur (15) en particulier est réalisé pour envoyer à un instant un rayonnement émis (17) sur la totalité de la zone de détection (27), en particulier au moyen de l'agencement d'imagerie (29).

13. Dispositif selon l'une des revendications précédentes,
**caractérisé en ce que** le système récepteur (21) comprend un récepteur (41) qui est subdivisé en une pluralité de récepteurs individuels, lesquels sont associés respectivement à au moins un lieu de réflexion (33).

14. Dispositif selon l'une des revendications précédentes,
**caractérisé en ce qu'**il est prévu un système qui, par référence au lieu de réflexion (33), sert à la détection sélective du rayonnement réfléchi (25) au moyen du système récepteur (21).

15. Dispositif selon l'une des revendications précédentes,
**caractérisé en ce qu'**un masque mobile est agencé dans le trajet de propagation du rayonnement réfléchi (25) entre l'agencement d'imagerie (29) et un récepteur (41) du système récepteur (21).

16. Dispositif selon l'une des revendications précédentes,
**caractérisé en ce que** les moyens à résolution locale (31) sont actifs du côté émission.

17. Dispositif selon l'une des revendications précédentes,
**caractérisé en ce qu'**il est prévu un système qui, par référence au lieu de réflexion (33), sert à l'émission sélective du rayonnement (17) au moyen du système émetteur (15).

18. Dispositif selon l'une des revendications précédentes,
**caractérisé en ce que** les moyens destinés à influencer le rayonnement (31) comprennent au moins un élément optique mobile, capable d'être piloté pour exécuter des mouvements de déflexion, en particulier un miroir, un prisme ou un coin, et/ou au moins une optique de diffraction capable d'être pilotée pour modifier le comportement de réfraction du rayonnement.

19. Dispositif selon l'une des revendications précédentes,
**caractérisé en ce qu'**il est constitué de manière symétrique, par référence à un plan (45) séparant le côté émission du côté réception, au moins pour ce qui concerne le mode de fonctionnement de principe.

20. Utilisation d'un agencement d'imagerie (29),
qui couvre complètement à chaque instant une zone de détection (27) du côté émission et/ou côté réception,
en particulier une lentille panorama, une lentille omnidirectionnelle ou un miroir de forme au moins partiellement conique,
dans un dispositif pour la détection en résolution locale d'objets (13) qui se trouvent dans une zone de surveillance (11), en particulier un dispositif selon l'une des revendications précédentes,
dans lequel le dispositif comprend un système émetteur (15) pour émettre un rayonnement électromagnétique (17) dans une zone d'émission (19), et un système récepteur (21) pour recevoir un rayonnement (25) réfléchi depuis une zone de réception (23), la zone d'émission (19) et la zone de réception (23) se chevauchant ou se recoupant dans la zone de détection (27), située à l'intérieur de la zone de surveillance (11) et couvrant un angle de détection, dans laquelle le rayonnement émis (17) est réfléchi par des objets (13),
dans lequel l'agencement d'imagerie (29) est situé dans le trajet de propagation du rayonnement émis (17) et/ou du rayonnement réfléchi (25), et
dans lequel le dispositif comprend des moyens à résolution locale (31) pour distinguer le rayonnement réfléchi (25) pour ce qui concerne le lieu de réflexion (33),
**caractérisé en ce que**
le système récepteur (21) comprend des moyens destinés à influencer le rayonnement (31), réalisés sous forme de moyens à résolution locale (31), pour influencer de manière variable dans le temps la direction de propagation du rayonnement réfléchi (25), lesdits moyens destinés à influencer le rayonnement (31) étant agencés dans le trajet de propagation du rayonnement (25) entre l'agencement imagerie (29) et un récepteur (41) du système récepteur (21), et/ou
**en ce que** le système émetteur (15) comprend des moyens destinés à influencer le rayonnement (31 ), réalisés sous forme de moyens à résolution locale (31), pour influencer de manière variable dans le temps la direction de propagation du rayonnement (17), lesdits moyens destinés à influencer le rayonnement (31) étant agencés dans le trajet de propagation du rayonnement (17) entre un émetteur (43) du système émetteur (15) et l'agencement d'imagerie (29).
